# EUROPÄISCHE PATENTSCHRIFT

(11) **EP 3 986 776 B1**
(45) Veröffentlichungstag und Bekanntmachung des Hinweises auf die Patenterteilung: **11.10.2023**
(21) Anmeldenummer: 20730379.3
(22) Anmeldetag: 14.05.2020
(51) Int. Cl.: B62L 3/02, F16D 53/00, F16D 55/00

(54) **BREMSEINHEIT FÜR EIN FAHRZEUG, BREMSVORRICHTUNG MIT DER BREMSEINHEIT SOWIE FAHRZEUG MIT DER BREMSEINHEIT UND/ODER DER BREMSVORRICHTUNG**
BRAKE SYSTEM FOR A VEHICLE, VEHICLE WITH SAID BRAKE SYSTEM
SYSTÈME DE FREINAGE POUR VÉHICULE, VÉHICULE AVEC LEDIT SYSTÈME DE FREINAGE

(30) Priorität: 18.06.2019 DE 102019116428
(43) Veröffentlichungstag der Anmeldung: 27.04.2022
(73) Patentinhaber: Schaeffler Technologies AG & Co. KG, 91074 Herzogenaurach (DE)
(72) Erfinder: ROCQUET, Stephane, 45640 Sandillon (FR); ORTMANN, Simon, 76532 Baden-Baden (DE); GALANT, Alexis, 45770 Saran (FR); DURR, Julien, 45400 Fleury les aubrais (FR)
(86) Internationale Anmeldenummer: PCT/DE2020/100415
(87) Internationale Veröffentlichungsnummer: WO 2020/253901

(56) Entgegenhaltungen:
- CN-U- 206 317 956
- DE-A1- 3 936 733
- DE-A1- 10 062 017
- DE-U1- 20 016 878

## Beschreibung

Die Erfindung betrifft eine Bremseinheit für ein Fahrzeug mit den Merkmalen des Oberbegriffs des Anspruchs 1. Die Erfindung betrifft des Weiteren eine Bremsvorrichtung mit der Bremseinheit sowie das Fahrzeug mit der Bremseinheit und/oder mit der Bremsvorrichtung.

Bei muskelbetriebenen Fahrzeugen, wie zum Beispiel Fahrrädern etc., ist es bekannt, Trommelbremsen, Scheibenbremsen oder Backenbremsen einzusetzen. Jedes der Bremssysteme hat unterschiedliche Vorteile in Bezug auf die Bremswirkung, die Systemkosten, Wartungsfreundlichkeit etc.

Beispielsweise beschreibt die Druckschrift DE 200 16 878 U1 einen Tretroller mit einer Bremseinrichtung, die als eine hydraulisch aktivierbare Scheibenbremse ausgebildet ist. Die Bremseinrichtung weist eine mit einem Rad drehfest verbundene Bremsscheibe und einen fest mit dem Rahmen des Tretrollers verbundenen Bremssattel auf, wobei der Bremssattel auf die Bremsscheibe wirkende Bremsbeläge enthält. Weiterer Stand der Technik ist in der DE 39 36 733 A1, der DE 100 62 017 A1 sowie der CN 206 317 956 U offenbart.

Es ist Aufgabe der vorliegenden Erfindung, eine Bremseinheit mit einem abgewandelten Aufbau für ein Fahrzeug vorzuschlagen. Diese Aufgabe wird durch eine Bremseinheit mit den Merkmalen des Anspruchs 1, durch eine Bremsvorrichtung mit den Merkmalen des Anspruchs 8 sowie durch ein Fahrzeug mit den Merkmalen des Anspruchs 9 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Bremseinheit, welche für ein Fahrzeug geeignet und/oder ausgebildet ist. Insbesondere ist das Fahrzeug als ein ein- oder mehrspuriges Fahrzeug, ausgebildet. Vorzugsweise ist das Fahrzeug als ein elektrisch angetriebenes Fahrzeug ausgebildet. Zum Beispiel ist das Fahrzeug ein Elektrokleinstfahrzeug, wobei unter "Elektrokleinstfahrzeug" Fahrzeuge ohne Sitz oder selbstbalancierende Fahrzeuge mit oder ohne Sitz zu verstehen sind.

Bevorzugt ist das Fahrzeug als ein Klein- oder Kleinstfahrzeug oder als ein Elektromobil ausgebildet. Das Fahrzeug weist vorzugsweise mindestens ein Rad auf. Mit nur einem Rad kann das Fahrzeug als ein elektrisches Einrad, z.B. als ein sogenanntes Monowheel oder Solowheel ausgebildet sein. Mit zwei oder mehr Rädern ist das Fahrzeug bevorzugt als ein Roller, insbesondere als ein Elektromotorrad, als ein Elektromotorroller, als ein Elektroroller, Elektrotretroller, Elektroscooter, z.B. E-Scooter, als ein Segway, Hoverboard, Kickboard, Skateboard, Longboard o.ä. ausgebildet. Alternativ kann das Fahrzeug als ein Fahrrad, insbesondere als ein Elektrofahrrad, z.B. als ein Pedelec oder als ein E-Bike ausgebildet sein. Das Fahrzeug kann alternativ als ein mehrspuriges Fahrrad, insbesondere mit drei oder mehr Rädern ausgebildet sein. Beispielsweise kann das Fahrzeug ein Transport- oder Lastenrad, insbesondere ein motorisiertes bzw. elektrisch angetriebenes Transport- oder Lastenrad, im Speziellen ein Dreirad- oder Vierrad-Pedelec oder eine Rikscha, insbesondere mit oder ohne Dach, oder ein Kabinenroller sein.

Das Fahrzeug kann ein oder mehrere der Bremseinheiten umfassen. Die Bremseinheit weist ein Gehäuse auf, wobei das Gehäuse an dem Fahrzeug stationär und/oder drehfest angeordnet und/oder anordbar ist. Vorzugsweise ist das Gehäuse koaxial zu einer Radachse des Fahrzeugs angeordnet. Insbesondere durchstößt die Radachse das Gehäuse. Hierzu weist das Gehäuse beispielsweise eine Durchgangsöffnung zur Aufnahme der Radachse auf.

Die Bremseinheit weist eine Hydraulikeinrichtung zur Erzeugung einer hydraulischen Kraft auf. Ferner weist die Bremseinheit eine Bremskörpereinrichtung auf, wobei die Bremskörpereinrichtung einen Bremspartner in einer Bremsvorrichtung für das Fahrzeug bildet oder trägt. Insbesondere bildet die Bremskörpereinrichtung den stationären Bremspartner, wobei ein rotierender Bremspartner drehfest mit einem Rad des Fahrzeugs verbunden ist.

Die Bremseinheit weist eine Hauptachse auf, wobei die Hauptachse als eine konstruktive und/oder gedachte Hilfsachse zu verstehen ist. Die Hauptachse kann beispielsweise durch das Gehäuse, insbesondere durch die Durchgangsöffnung oder die Radachse definiert sein. Alternativ hierzu kann die Hauptachse durch die Hydraulikeinrichtung, insbesondere koaxial zu einem Kolben und/oder zu einem Zylinder, definiert sein. Alternativ oder ergänzend kann die Hauptachse durch die Bremskörpereinrichtung definiert sein.

Es ist vorgesehen, dass die Hydraulikeinrichtung die Bremskörpereinrichtung relativ zu dem Gehäuse in einer axialen Richtung bewegt, um eine Bremskraft zu erzeugen. Insbesondere wird die Bremskraft von der Bremskörpereinrichtung als stationärer Bremspartner an den rotierenden Bremspartner übertragen. Beispielsweise kann der Zylinder der Hydraulikeinrichtung mit dem Gehäuse und der Kolben der Hydraulikeinrichtung mit der Bremskörpereinrichtung wirkverbunden sein. Besonders bevorzugt ist der Zylinder mit dem Gehäuse und der Kolben mit der Bremskörpereinrichtung fest oder formschlüssig verbunden.

Die Bremseinheit weist eine Führungseinrichtung auf, welche bei einem axialen Verfahren der Bremskörpereinrichtung relativ zu dem Gehäuse die Bremskörpereinrichtung in radialer Richtung, insbesondere zu der Hauptachse, führt. Hierdurch wird zum Beispiel ein Verkippen zwischen Bremskörpereinrichtung und Gehäuse vermieden.

Im Rahmen der Erfindung wird vorgeschlagen, dass die Führungseinrichtung eine Masterführung und eine Hilfsführung aufweist. Somit weist die Führungseinrichtung mindestens oder genau zwei Führungen auf. Es ist vorgesehen, dass die Masterführung und die Hilfsführung außermittig zu der Hauptachse angeordnet sind. Insbesondere sind diese nicht koaxial, sondern versetzt zu der Hauptachse platziert.

Es ist dabei eine Überlegung der Erfindung, dass bei der Übertragung der Bremskraft von dem stationären Bremspartner zu dem rotierenden Bremspartner in den stationären Bremspartner neben axialen Kräften, insbesondere neben Bremskräften oder entsprechenden Gegenkräften, Drehmomente um die Hauptachse in die Bremskörpereinrichtung eingeleitet werden. Um ein Verkippen oder ein Verdrehen der Bremskörpereinrichtung relativ zu dem Gehäuse zu vermeiden, wird vorgeschlagen, die Führungseinrichtung mit mindestens oder genau zwei separaten Einzelführungen auszustatten.

Besonders vorteilhaft ist die Erfindung einzusetzen, wenn die Bremskörpereinrichtung eine Bremsfläche aufweist, wobei die Bremsfläche umlaufend, insbesondere ununterbrochenen oder weitgehend ununterbrochen, zu der Hauptachse ausgebildet ist. Insbesondere ist die Bremsfläche als ein durchgehender Kreisring ausgebildet. Wie es üblich ist, kann die Bremsfläche durch Lüftungslöcher, Befestigungslöcher oder ähnliches durchbrochen sein. Alternativ oder ergänzend kann die Hydraulikeinrichtung einen Ringraum und einen Ringkolben aufweisen, wobei der Ringkolben in dem Ringraum angeordnet ist. In dem Ringraum ist die Hydraulikflüssigkeit zur Betätigung des Ringkolbens angeordnet. Der Ringraum und der Ringkolben sind umlaufend zu der Hauptachse ausgebildet. Beide Alternativen reflektieren den Umstand, dass die Bremseinheit hinsichtlich der Bremsfläche nicht segmentartig ausgebildet ist, sondern sich über 360° um die Hauptachse erstreckt. Die durch diese konstruktive Ausgestaltung eingeleiteten Drehmomente können durch die erfindungsgemäße Führungseinrichtung besonders effektiv abgeleitet werden.

Gemäß der Erfindung weist die Masterführung ein erstes radiales Spiel und die Hilfsführung ein zweites radiales Spiel auf. Das radiale Spiel kann zum einen lokal jeweils in der Masterführung und in der Hilfsführung gemessen werden. Ist die Masterführung und/oder die Hilfsführung rotationssymmetrisch ausgebildet, so kann das radiale Spiel lokal in jede Richtung in Bezug auf die Masterführung bzw. auf die Hilfsführung gemessen werden. Alternativ oder ergänzend kann das radiale Spiel jeweils in Umlaufrichtung um die Hauptachse gemessen werden. Somit wird das Drehmoment in Umlaufrichtung primär von der Masterführung und sekundär durch die Hilfsführung aufgenommen. Dies führt dazu, dass das Drehmoment sicher abgeleitet werden kann. Auf der anderen Seite wird durch das unterschiedliche radiale Spiel erreicht, dass keine Überdefinition der Bremseinheit in Umlaufrichtung um die Hauptachse vorliegt und dadurch ein Verklemmen der Bremskörpereinrichtung auch bei unterschiedlichen Temperaturen etc. vermieden ist.

Bei einer bevorzugten konstruktiven Ausgestaltung weist die Masterführung einen ersten Achsabschnitt auf, welcher an der Bremskörpereinrichtung angeordnet ist und insbesondere einen Bestandteil der Bremskörpereinrichtung bildet. Ferner weist die Masterführung einen ersten Führungsabschnitt auf, welcher an dem Gehäuse angeordnet ist und insbesondere einen Bestandteil des Gehäuses bildet. Der erste Achsabschnitt ist koaxial in dem ersten Führungsabschnitt angeordnet und wird durch diesen geführt. Alternativ oder ergänzend weist die Hilfsführung einen zweiten Achsabschnitt auf, welcher an der Bremskörpereinrichtung angeordnet ist und insbesondere einen Bestandteil der Bremskörpereinrichtung bildet. Ferner weist die Hilfsführung einen zweiten Führungsabschnitt auf, welcher an dem Gehäuse angeordnet ist und insbesondere einen Bestandteil des Gehäuses bildet. Der zweite Achsabschnitt ist koaxial in dem zweiten Führungsabschnitt angeordnet und wird durch diesen geführt. Das zweite radiale Spiel wird zwischen dem zweiten Achsabschnitt und dem zweiten Führungsabschnitt vorzugsweise in Umlaufrichtung um die Hauptachse oder alternativ um eine eigene Mittelachse gemessen.

Vorzugsweise sind die Achsabschnitte und/oder die Führungsabschnitte in dem Führungsbereich rotationssymmetrisch ausgebildet.

Es kann vorgesehen sein, dass die Achsabschnitte jeweils eine Führungsfläche, somit eine erste und eine zweite Führungsfläche, zur Anlage an den Führungsabschnitten aufweisen. Diese Ausgestaltung hat den Vorteil, dass sehr wenige Komponenten oder Teile verwendet werden. Auf der anderen Seite müssen die Achsabschnitte bzw. die Führungsabschnitte aus einem entsprechenden funktionsgerechten Material ausgebildet sein. Alternativ ist es besonders bevorzugt, dass auf den ersten Achsabschnitt eine erste Führungshülse aufgesetzt ist, welche die erste Führungsfläche bereitstellt. Alternativ oder ergänzend weist der zweite Achsabschnitt eine zweite Führungshülse auf, welche die zweite Führungsfläche bereitstellt. Insbesondere ist die erste und/oder die zweite Führungshülse als ein gerader Hohlzylinder ausgebildet. Durch den Einsatz einer Führungshülse kann eine harte und damit verschleißarme Führungsfläche bereitgestellt werden, wobei jedoch die Achsabschnitte der Bremskörpereinrichtung aus einem beliebigen Material gebildet sein können.

Das erste radiale Spiel wird zwischen der ersten Führungsfläche, insbesondere dem ersten Achsabschnitt oder (wenn vorhanden) der ersten Führungshülse, und dem ersten Führungsabschnitt vorzugsweise in Umlaufrichtung um die Hauptachse oder alternativ um eine eigene Mittelachse gemessen. Das zweite radiale Spiel wird zwischen der zweiten Führungsfläche, insbesondere dem zweiten Achsabschnitt oder (wenn vorhanden) der zweiten Führungshülse, und dem zweiten Führungsabschnitt vorzugsweise in Umlaufrichtung um die Hauptachse oder alternativ um eine eigene Mittelachse gemessen.

Bei einer bevorzugten Weiterbildung der Erfindung weist das Gehäuse einen Gehäusegrundkörper auf. Der Gehäusegrundkörper kann beispielsweise durch Aluminiumdruckguss gefertigt sein. Es ist besonders bevorzugt vorgesehen, dass der erste und/oder der zweite Führungsabschnitt einstückig durch den Gehäusegrundkörper gebildet ist. Damit werden die Führungsabschnitte durch einen Abschnitt des Aluminiumdruckgusses gebildet und können dadurch kostengünstig hergestellt werden. Alternativ oder ergänzend weist die Bremskörpereinrichtung einen Bremsgrundkörper auf. Der Bremsgrundkörper kann beispielsweise durch Aluminiumdruckguss gefertigt sein. Es ist besonders bevorzugt vorgesehen, dass der erste und/oder der zweite Achsabschnitt einstückig durch den Bremsgrundkörper gebildet ist. Damit werden die Achsabschnitte durch einen Abschnitt des Aluminiumdruckgusses gebildet und können dadurch kostengünstig hergestellt werden.

In einer möglichen konstruktiven Ausgestaltung weist die Bremskörpereinrichtung eine Kraftverteilungsplatte auf. Die Kraftverteilungsplatte ist insbesondere als eine Blechplatte aus Metall realisiert. Die Kraftverteilungsplatte ist mit der Hydraulikeinrichtung wirkverbunden. Besonders bevorzugt weist die Kraftverteilungsplatte eine Anlagefläche für den Ringkolben oder für ein Adapterstück, welches sich an den Ringkolben abstützt, auf. Die Kraftverteilungsplatte ist über den ersten, den zweiten und zudem über mindestens oder genau einen dritten Achsabschnitt an die Bremskörpereinrichtung angebunden. Vorzugsweise ist die Kraftverteilungsplatte über die mindestens oder genau drei Achsabschnitte mit dem Bremsgrundkörper verbunden.

Bei einer bevorzugten konstruktiven Ausgestaltung kann vorgesehen sein, dass die drei Achsabschnitte in Umlaufrichtung regelmäßig verteilt sind, um die Bremskraft möglichst gleichmäßig in die Bremskörpereinrichtung einzuleiten. Der dritte Achsabschnitt ist in radialer Richtung und/oder in Umlaufrichtung mit einem noch größeren radialen Spiel als das erste und/oder zweite radiale Spiel oder überhaupt nicht geführt.

In einer bevorzugten Weiterbildung der Erfindung weist die Bremseinheit eine Rückstelleinrichtung zum Rückstellen der Bremskörpereinrichtung auf. Die Rückstelleinrichtung weist eine erste Rückstellfeder, eine zweite Rückstellfeder und eine dritte Rückstellfeder auf. Die erste Rückstellfeder ist der Masterführung, die zweite Rückstellfeder der Hilfsführung und die dritte Rückstellfeder ist dem dritten Achsabschnitt zugeordnet. Auf diese Weise wird auch die Rückstellkraft nach dem Bremsvorgang gleichmäßig eingeleitet. Auf der einen Seite stützen sich die Rückstellfedern und/oder die Rückstelleinrichtung an dem Gehäuse und auf der anderen Seite bevorzugt an dem Bremsgrundkörper ab.

Ein weiterer Gegenstand der Erfindung betrifft eine Bremsvorrichtung für ein Fahrzeug, wobei die Bremsvorrichtung die Bremseinheit aufweist wie diese zuvor beschrieben wurde. Besonders bevorzugt weist die Bremskörpereinrichtung eine Bremsscheibe auf, wobei die Bremsscheibe aus Metall gefertigt ist. Ferner weist die Bremsvorrichtung einen Bremsbelag auf, wobei der Bremsbelag drehfest mit dem Rad des Fahrzeugs verbunden ist. Vorzugsweise ist der Bremsbelag ebenfalls kreisringförmig ausgebildet.

Ein weiterer Gegenstand der Erfindung betrifft ein Fahrzeug mit der Bremseinheit und/oder mit der Bremsvorrichtung wie dieses bereits zuvor beschrieben wurde. Es ist vorgesehen, dass das Fahrzeug ein Elektroroller oder ein Elektroscooter ist. Es ist besonders bevorzugt, dass das Fahrzeug einen Elektromotor aufweist, wobei der Elektromotor in dem Rad angeordnet ist, das Rad bildet und/oder als Nabenmotor ausgebildet ist.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine dreidimensionale Darstellung eines Fahrzeugs mit einer Bremseinheit als ein Ausführungsbeispiel der Erfindung;
- Figur 2: eine schematische Schnittdarstellung der Bremseinheit aus der Figur 1 als ein weiteres Ausführungsbeispiel der Erfindung.
- Figur 3: eine dreidimensionale, schematische axiale Darstellung der Bremseinheit aus der Figur 1.

Einander entsprechende oder gleiche Teile sind in den Figuren jeweils mit den gleichen Bezugszeichen versehen.

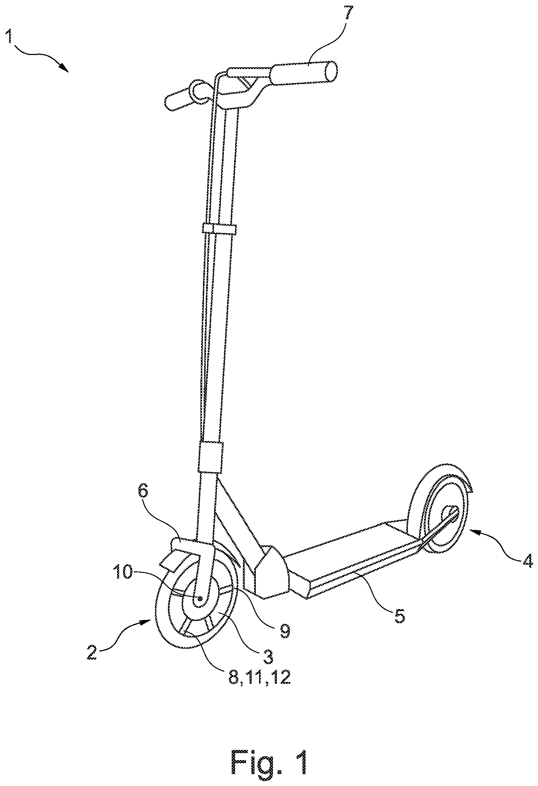

Figur 1 zeigt in einer dreidimensionalen Darstellung ein Fahrzeug 1, wobei das Fahrzeug 1 als ein Elektroroller, Elektrotretroller oder Elektroscooter, auch als sogenannter E-Scooter bekannt, ausgebildet ist. Das Fahrzeug 1 weist hierzu ein Radmodul 2 mit einem Rad 3 auf, welches ein Vorderrad des Fahrzeugs 1 bildet. Das Radmodul 2 dient insbesondere zum elektrischen Antrieb des Fahrzeugs 1. Zudem weist das Fahrzeug 1 ein, insbesondere antriebsloses, Hinterrad 4 auf, welches an einem Fahrzeugrahmen 5 des Fahrzeugs 1 drehbar gelagert ist.

Das Fahrzeug 1 weist eine Radgabel 6 auf, wobei das Radmodul 2 in der Radgabel 6 drehbar gelagert ist. Die Radgabel 6 ist über einen Lenker 7 schwenkbeweglich mit dem Rahmen 5 verbunden, sodass das Radmodul 2 zur Lenkung des Fahrzeugs 1 über den Lenker 7 verschwenkt werden kann.

Das Rad 3 des Radmoduls 2 weist eine Radfelge 8 und einen Reifen 9 auf, wobei der Reifen 9 auf der Radfelge 8 angeordnet ist. Beispielsweise ist die Radfelge 8 als eine Stahl-, Alu- oder Kunststofffelge ausgebildet. Beispielsweise ist der Reifen 9 als ein mit Luft befüllter Gummireifen ausgebildet.

Das Radmodul 3 weist eine Radachse 10 auf, welche mit ihrer Längsachse eine Hauptachse H definiert. Das Rad 3 ist mit seiner Rotationsachse koaxial zu der Radachse 10 angeordnet. Die Radachse 10 ist an der Radgabel 6 festgelegt, wobei die Radfelge 8 über zwei Lagereinrichtungen, z.B. Wälzlager, drehbar auf der Radachse 10 gelagert ist.

Zum Antrieb des Rades 3 weist das Radmodul 2 eine in die Radfelge 8 integrierte Antriebsvorrichtung 11, z.B. ein Elektromotor, auf. Die Antriebsvorrichtung 11 weist einen drehfest mit der Radachse 10 verbundenen Stator auf, welcher in axialer Richtung in Bezug auf die Hauptachse H zwischen den beiden Lagereinrichtungen angeordnet ist. Zudem weist die Antriebsvorrichtung 12 einen drehfest mit der Radfelge 8 verbundenen Rotor auf. In einem Fahrbetrieb des Fahrzeugs 1 wird die Radfelge 8 durch die Antriebsvorrichtung 11 angetrieben, wobei das Rad 3 um die Hauptachse H rotiert.

Das Radmodul 2 weist eine Bremsvorrichtung 12 auf, welche zur Übertragung eines Bremsmoments auf das Rad 3 dient. Die Bremsvorrichtung 12 ist als eine Reibbremse ausgebildet und auf einer Seite der Radfelge 8 angeordnet und/oder mit der Radfelge 8 wirkverbunden.

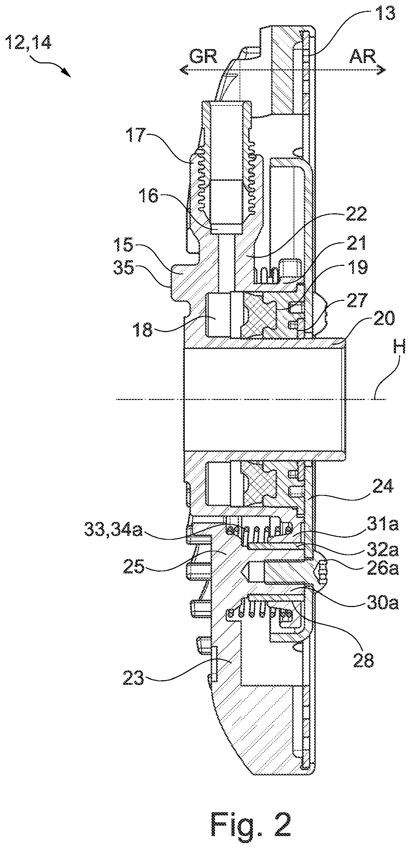

Die Bremsvorrichtung 12 weist einen ringförmigen, insbesondere die Hauptachse H umlaufenden, Bremsbelag als einen Bremspartner sowie eine Bremsscheibe 13 (Figur 2) als weiteren Bremspartner auf, wobei der Bremsbelag und die Bremsscheibe 13 in Bezug auf die Hauptachse H koaxial zueinander angeordnet sind. Der Bremsbelag ist in Bezug auf die Hauptachse H an einer axialen Stirnseite der Radfelge 8 drehfest montiert, sodass der Bremsbelag im Fahrbetrieb durch die Radfelge 8 mitgenommen wird und um die Hauptachse H rotiert. Die Bremsscheibe 13 ist in einer axialen Richtung AR zu dem Bremsbelag hin und in einer axialen Gegenrichtung GR von dem Bremsbelag weg bewegbar. In Umlaufrichtung um die Hauptachse H ist die Bremsscheibe 13 drehfest mit der Radachse 10 oder der Radgabel 6 gekoppelt.

In einem betätigten Zustand der Bremsvorrichtung 12 kontaktiert die Bremsscheibe 13 mit dem Bremsbelag, sodass ein Reibschluss gebildet wird, um das rotierende Rad 3 durch Reibung zwischen der Bremsscheibe 13 und dem Bremsbelag abzubremsen.

Die Figur 2 zeigt einen schematischen Längsschnitt durch eine Bremseinheit 14, wobei die Bremseinheit 14 den gabelfesten Teil der Bremsvorrichtung 12 bildet, insbesondere trägt die Bremseinheit 14 die Bremsscheibe 13 und verschiebt diese in axialer Richtung AR und Gegenrichtung GR.

Die Bremseinheit 14 weist ein Gehäuse 15 auf, wobei das Gehäuse 15 koaxial zu der Hauptachse H angeordnet und drehfest an der Radgabel 6 angeordnet ist. Die Bremseinheit 14 weist eine Hydraulikeinrichtung 16 auf, wobei die Hydraulikeinrichtung 16 in dem Gehäuse 15 angeordnet, insbesondere integriert ist.

Die Hydraulikeinrichtung 16 weist einen Anschluss 17 auf, über den sie mit einem hydraulischen Druck beaufschlagt werden kann. Der Anschluss 17 ist mit einem Ringraum 18 als Druckraum strömungstechnisch verbunden, wobei der Ringraum 18 einen Zylinder der Hydraulikeinrichtung 16 bildet. Der Ringraum 18 ist koaxial zu der Hauptachse H angeordnet. In dem Ringraum 18 ist ein Ringkolben 19 angeordnet, wobei der Ringkolben 19 in dem Ringraum 18 als Zylinder hydraulisch in axialer Richtung AR verschoben werden kann. Der Ringkolben 19 ist in axialer Richtung zweiteilig ausgebildet. Das Gehäuse 15 weist einen Aufnahmeabschnitt 20 zur Aufnahme der Radachse 10 auf, wobei der Aufnahmeabschnitt 20 eine Innenwand des Ringraums 18 bildet. Ferner weist das Gehäuse 15 eine Außenwand 21 auf, wobei die Außenwand 21 den Ringraum 18 radial außen begrenzt. Der Aufnahmeabschnitt 20 sowie die Außenwand 21 sind als einstückiger Gehäusegrundkörper 22 ausgebildet.

Die Bremseinheit 14 weist eine Bremskörpereinrichtung 23 auf, wobei die Bremskörpereinrichtung 23 die Bremsscheibe 13 trägt und gemeinsam mit dieser in axialer Richtung AR bzw. in axialer Gegenrichtung GR durch die Hydraulikeinrichtung 16 verschoben wird. Die Bremskörpereinrichtung 23 weist eine Kraftverteilungsplatte 24 auf, wobei diese aus Stabilitätsgründen als ein Topf mit einem Kragen ausgebildet ist. In einem radialen Innenbereich liegt die Kraftverteilungsplatte 24 auf dem Ringkolben 19 auf, so dass die Kraftverteilungsplatte 24 bei einer axialen Bewegung des Ringkolbens 19 mitgeführt wird. Die Bremskörpereinrichtung 23 weist einen Bremsgrundkörper 25 auf, wobei der Bremsgrundkörper 25 die Bremsscheibe 13 trägt. Der Bremsgrundkörper 25 ist über eine erste, eine zweite und eine dritte Schraubverbindung 26 a, b, c mit der Kraftverteilungsplatte 24 verbunden, so dass bei der axialen Bewegung der Bremsgrundkörper 25 und damit die Bremsscheibe 13 in axialer Richtung AR mitgeführt wird.

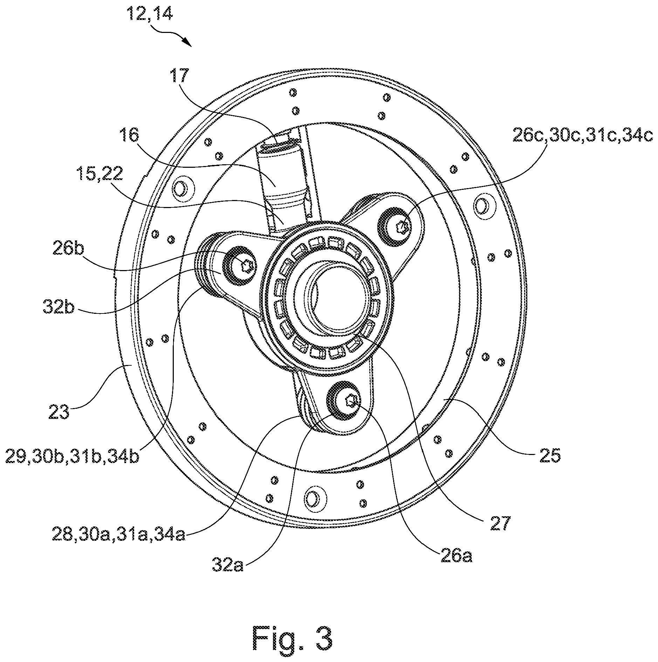

Die Figur 3 zeigt eine axiale Draufsicht auf die Bremseinheit 14 in einer dreidimensionalen Darstellung. Dabei ist jedoch die Kraftverteilungsplatte 24 grafisch unterdrückt, so dass die darunterliegenden Komponenten erkennbar sind. Zum einen ist nochmals der Ringkolben 19 zu erkennen, wobei der Ringkolben 19 über eine Dichtung 27 gegen eindringende Verschmutzungen geschützt ist. Zum anderen sind die Schraubverbindungen 26 a, b, c zu erkennen, welche jeweils voneinander um 120° versetzt angeordnet sind.

Für eine Führung des Bremsgrundkörpers 25 mit der Kraftverteilungsplatte 24 und dem Ringkolben 19 in Querrichtung zur axialen Richtung AR weist die Bremseinheit 14 eine Masterführung 28 und eine Hilfsführung 29 auf. Die Masterführung 28 und die Hilfsführung 29 sind koaxial zu den Schraubverbindungen 26 a, b und/oder ebenfalls um 120° versetzt angeordnet. Unter der dritten Schraubverbindung 26 c befindet sich keine Führung, sondern nur eine Fixierung zwischen der Kraftverteilungsplatte 24 und dem Bremsgrundkörper 25.

Funktional betrachtet ist das radiale Spiel bei der Masterführung 28 kleiner ausgeführt als bei der Hilfsführung 29. Diese Ausbildung soll helfen, eine Überdefinition zu vermeiden. Auf diese Weise ist sichergestellt, dass der Bremsgrundkörper 25 und damit die Bremsscheibe 13 verklemmungsfrei verfahren werden kann. Eine weitere technische Wirkung der Masterführung 28 oder Hilfsführung 29 liegt darin, dass beim Bremsvorgang eingeleitete Drehmomente um die Hauptachse H von der Bremsscheibe 13 über den Bremsgrundkörper 25 zu dem Gehäuse 15 geleitet werden kann. Das radiale Spiel kann wahlweise rotationssymmetrisch lokal bei den jeweiligen Führungen 28 oder 29 gemessen werden, alternativ hierzu wird das radiale Spiel in Umlaufrichtung um die Hauptachse H gemessen.

Die Figur 2 zeigt in der Schnittdarstellung die Masterführung 28, wobei die Hilfsführung 29 von dem Aufbau identisch ausgebildet ist. Die Masterführung 28 weist einen ersten Achsabschnitt 30 a auf, wobei der Achsabschnitt 30 a einstückig aus dem Bremsgrundkörper 25 ausgeformt ist. Auf der radialen Innenseite ist ein Gewinde vorgesehen, in das eine Schraube eingreift, um die Schraubverbindung 26 a zu bilden. Die Hilfsführung 29 weist einen zweiten Achsabschnitt 30 b auf, die dritte Schraubverbindung 26 c weist einen dritten Achsabschnitt 30 c auf, wobei der zweite und der dritte Achsabschnitt 30 b, c genauso aufgebaut sind wie der erste Achsabschnitt 30 a, so dass auf dessen Beschreibung verwiesen wird.

Die Masterführung 28 weist einen ersten Führungsabschnitt 31 a auf, wobei der erste Führungsabschnitt 31 a den ersten Achsabschnitt 30 a aufnimmt. Insbesondere ist der erste Führungsabschnitt 31 a koaxial und konzentrisch zu dem ersten Achsabschnitt 30 a angeordnet. Die Hilfsführung 29 weist einen zweiten Führungsabschnitt 31 b auf, die dritte Schraubverbindung 26 c weist einen dritten Führungsabschnitt 31 c auf, wobei der zweite und der dritte Führungsabschnitt 31 b, c genauso aufgebaut sind wie der erste Führungsabschnitt 31 a, so dass auf dessen Beschreibung verwiesen wird.

Die Masterführung 28 weist eine erste Führungshülse 32 a auf, wobei die erste Führungshülse 32 a auf den ersten Achsabschnitt 30 a aufgesetzt ist und eine Führungsfläche für den ersten Führungsabschnitt 31 a bereitstellt. Die Hilfsführung 29 weist eine zweite Führungshülse 32 b auf, die auf den zweiten Achsabschnitt 30 b aufgesetzt ist und eine zweite Führungsfläche für den zweiten Führungsabschnitt 31 a bereitstellt. Die dritte Schraubverbindung 26 c weist keine Führungshülse auf, so dass das radiale Spiel wahlweise als sehr groß, insbesondere größer als das erste und das zweite radiale Spiel, bezeichnet werden kann oder die dritte Schraubverbindung 26 c keine Führungsfunktion umsetzt.

Somit werden die aufgrund des Bremsvorgangs eingeleiteten Drehmomente um die Hauptachse H von der Bremsscheibe 13 über den Bremsgrundkörper 25 nachfolgend über die Masterführung 28 und die Hilfsführung 29 in das Gehäuse 15 eingeleitet. Das Gehäuse 15 weist einen Formschlussabschnitt 35 auf, welcher in die Radgabel 6 eingreift, so dass das Drehmoment in die Radgabel 6 abgeleitet werden kann.

Die Bremseinheit 14 weist eine Rückstelleinrichtung 33 auf, wobei die Rück Stelleinrichtung 33 durch drei Rückstellfedern 34 a, b, c gebildet ist. In der Figur 2 ist die erste Rückstellfeder 34 a gezeigt, welche als eine Druckfeder ausgebildet ist, die koaxial zu der Masterführung 18 und/oder zu dem ersten Achsabschnitt 30 a angeordnet ist und bei einer axialen Bewegung der Bremsscheibe 13 in axialer Richtung AR komprimiert wird. Die zweite und die dritte Rückstellfeder 34 b, c sind koaxial zu der Hilfsführung 29 bzw. koaxial zu dem zweiten Achsabschnitt 30 b bzw. koaxial zu dem dritten Achsabschnitt 30 c angeordnet und werden bei der axialen Bewegung der Bremsscheibe 13 in axialer Richtung AR ebenfalls komprimiert.

Sobald der hydraulische Druck in der Hydraulikeinrichtung 16 nachlässt kann die Bremsscheibe 13 in der axialen Gegenrichtung GR durch die Federkraft der Rückstellfedern 34 a, b, c wieder zurückgestellt werden.

### Bezugszeichenliste

- 1: Fahrzeug
- 2: Radmodul
- 3: Rad
- 4: Hinterrad
- 5: Fahrzeugrahmen
- 6: Radgabel
- 7: Lenker
- 8: Radfelge
- 9: Reifen
- 10: Radachse
- 11: Antriebsvorrichtung
- 12: Bremsvorrichtung
- 13: Bremsscheibe
- 14: Bremseinheit
- 15: Gehäuse
- 16: Hydraulikeinrichtung
- 17: Anschluss
- 18: Ringraum
- 19: Ringkolben
- 20: Aufnahmeabschnitt
- 21: Außenwand
- 22: Gehäusegrundkörper
- 23: Bremskörpereinrichtung
- 24: Kraftverteilungsplatte
- 25: Bremsgrundkörper
- 26a, b, c: Schraubverbindungen
- 27: Dichtung
- 28: Masterführung
- 29: Hilfsführung
- 30 a, b, c: Achsabschnitten
- 31 a, b, c: Führungsabschnitt
- 32 a, b: Führungshülse
- 33: Rückstelleinrichtung
- 34a,b,c: Rückstellfedern
- 35: Formschlussabschnitt

## Patentansprüche

1. Bremseinheit (14) für ein Fahrzeug (1),
mit einem Gehäuse (15),
mit einer Hydraulikeinrichtung (16),
mit einer Bremskörpereinrichtung (23), wobei die Bremskörpereinrichtung (23) einen Bremspartner in einer Bremsvorrichtung (12) für das Fahrzeug (1) bildet oder trägt, wobei das Gehäuse (15), die Hydraulikeinrichtung (16) und/oder die Bremskörpereinrichtung (23) eine Hauptachse (H) definieren,
wobei die Hydraulikeinrichtung (16) die Bremskörpereinrichtung (23) relativ zu dem Gehäuse (15) in einer axialen Richtung (AR) bewegt, um eine Bremskraft zu erzeugen,
mit einer Führungseinrichtung, wobei die Führungseinrichtung die Bremskörpereinrichtung (23) bei der axialen Bewegung (AR) in radialer Richtung führt,
**dadurch gekennzeichnet, dass**
die Führungseinrichtung eine Masterführung (28) und eine Hilfsführung (29) aufweist, wobei die Masterführung (28) und die Hilfsführung (29) außermittig zur Hauptachse angeordnet sind, und dass die Masterführung (28) ein erstes radiales Spiel und die Hilfsführung (29) ein zweites radiales Spiel aufweist, wobei das erste radiale Spiel kleiner als das zweite radiale Spiel ausgebildet ist

2. Bremseinheit (14) nach Anspruch 1, **dadurch gekennzeichnet, dass** die Bremskörpereinrichtung (23) eine Bremsfläche aufweist, wobei die Bremsfläche umlaufend zu der Hauptachse (H) ausgebildet ist und/oder wobei die Hydraulikeinrichtung (16) einen Ringraum (18) und einen Ringkolben (19) aufweist, wobei der Ringraum (18) und der Ringkolben (19) umlaufend zu der Hauptachse (H) ausgebildet sind.

3. Bremseinheit (14) nach einem der vorhergehenden Ansprüche, **dadurch gekennzeichnet, dass** die Masterführung (28) einen ersten Achsabschnitt (30a) aufweist, wobei der erste Achsabschnitt (30a) an der Bremskörpereinrichtung (23) angeordnet ist, und einen ersten Führungsabschnitt (31a) aufweist, wobei der erste Führungsabschnitt (31a) an dem Gehäuse (15) angeordnet ist, wobei der erste Achsabschnitt (30a) koaxial in dem ersten Führungsabschnitt (31a) angeordnet ist und/oder dass die Hilfsführung (29) einen zweiten Achsabschnitt (30b), wobei der zweite Achsabschnitt (30b) an der Bremskörpereinrichtung (23) angeordnet ist, und einen zweiten Führungsabschnitt (31b) aufweist, wobei der zweite Führungsabschnitt (31b) an dem Gehäuse (15) angeordnet ist, wobei der zweite Achsabschnitt (30b) koaxial in dem zweiten Führungsabschnitt (31b) angeordnet ist.

4. Bremseinheit (14) nach einem der Ansprüche 1 bis 3, **dadurch gekennzeichnet, dass** die Masterführung (28) eine erste Führungshülse (32a) aufweist, wobei die erste Führungshülse (32a) auf dem ersten Achsabschnitt (30a) aufgesetzt ist, und/oder dass die Hilfsführung (29) eine zweite Führungshülse (32b) aufweist, wobei die zweite Führungshülse (32b) auf dem zweiten Achsabschnitt (30b) aufgesetzt ist.

5. Bremseinheit (14) nach einem der vorhergehenden Ansprüche, **dadurch gekennzeichnet, dass** das Gehäuse (15) einen Gehäusegrundkörper (22) aufweist, wobei der erste und der zweite Führungsabschnitt (31a,b) einstückig durch den Gehäusegrundkörper (22) gebildet sind und/oder dass die Bremskörpereinrichtung (23) einen Bremsgrundkörper (25) aufweist, wobei der erste und der zweite Achsabschnitt (30a,b) einstückig durch den Bremsgrundkörper (25) gebildet sind.

6. Bremseinheit (14) nach einem der der vorhergehenden Ansprüche, **dadurch gekennzeichnet, dass** die Bremskörpereinrichtung (23) eine Kraftverteilungsplatte (24) aufweist, wobei die Kraftverteilungsplatte (24) mit der Hydraulikeinrichtung (16) wirkverbunden ist, und wobei die Kraftverteilungsplatte (24) über den ersten, zweiten und einen dritten Achsabschnitt (30a,b,c) angebunden ist, um die Bremskraft von der Hydraulikeinrichtung (16) in die Bremskörpereinrichtung (23) zu leiten.

7. Bremseinheit (14) nach Anspruch 6, **gekennzeichnet durch** eine Rückstelleinrichtung (33) zum Rückstellen der Bremskörpereinrichtung (23) in einer axialen Gegenrichtung (GR), wobei die Rückstelleinrichtung (33) eine erste Rückstellfeder, eine zweite Rückstellfeder und eine dritte Rückstellfeder (34a,b,c) aufweist, wobei die erste Rückstellfeder (30a) koaxial zu der Masterführung (28) und/oder zu dem ersten Achsabschnitt (30a), die zweite Rückstellfeder (34b) koaxial zu der Hilfsführung (29) und/oder zu dem zweiten Achsabschnitt (30b) und die dritte Rückstellfeder (34c) koaxial zu dem dritten Achsabschnitt (30c) angeordnet ist.

8. Bremsvorrichtung (12) **gekennzeichnet durch** eine Bremseinheit (14) nach einem der vorhergehenden Ansprüche, **dadurch gekennzeichnet, dass** die Bremskörpereinrichtung (23) eine Bremsscheibe (13) auf, wobei die Bremsscheibe (13) aus Metall gefertigt ist und/oder wobei die Bremsvorrichtung (12) einen Bremsbelag auf, wobei der Bremsbelag drehfest mit einem Rad (13) des Fahrzeugs (1) verbunden und/oder verbindbar ist.

9. Fahrzeug (1) mit der Bremseinheit (14) nach einem der Ansprüche 1 bis 7 und/oder mit der Bremsvorrichtung (12) nach Anspruch 8, **dadurch gekennzeichnet, dass** das Fahrzeug als ein Elektroroller oder als ein Elektroscooter ausgebildet ist.

## Claims

1. A brake unit (14) for a vehicle (1),
having a housing (15),
having a hydraulic device (16),
having a brake body device (23), wherein the brake body device (23) forms or supports a braking partner in a braking device (12) for the vehicle (1), wherein the housing (15), the hydraulic device (16) and/or the brake body device (23) define a main axis (H),
wherein the hydraulic device (16) moves the brake body device (23) relative to the housing (15) in an axial direction (AR) in order to generate a braking force,
having a guide device, wherein the guide device guides the brake body device (23) during the axial movement (AR) in the radial direction,
**characterised in that**
the guide device has a master guide (28) and an auxiliary guide (29), wherein the master guide (28) and the auxiliary guide (29) are arranged eccentrically to the main axis, and **in that** the master guide (28) has a first radial play and the auxiliary guide (29) has a second radial play, wherein the first radial play is less than the second radial play.

2. The brake unit (14) according to claim 1, **characterised in that** the brake body device (23) has a braking surface, wherein the braking surface is formed circumferentially to the main axis (H) and/or wherein the hydraulic device (16) has an annular space (18) and an annular piston (19), wherein the annular space (18) and the annular piston (19) are formed circumferentially to the main axis (H).

3. The brake unit (14) according to any one of the preceding claims, **characterised in that** the master guide (28) has a first axle section (30a), wherein the first axle section (30a) is arranged on the brake body device (23), and has a first guide section (31a), wherein the first guide section (31a) is arranged on the housing (15), wherein the first axle section (30a) is arranged coaxially in the first guide section (31a) and/or **in that** the auxiliary guide (29) has a second axle section (30b), wherein the second axle section (30b) is arranged on the brake body device (23) and has a second guide section (31b), wherein the second guide section (31b) is arranged on the housing (15), wherein the second axle section (30b) is arranged coaxially in the second guide section (31b).

4. The brake unit (14) according to any one of claims 1 to 3, **characterised in that** the master guide (28) has a first guide sleeve (32a), wherein the first guide sleeve (32a) is placed on the first axle section (30a), and/or **in that** the auxiliary guide (29) has a second guide sleeve (32b), wherein the second guide sleeve (32b) is placed on the second axle section (30b).

5. The brake unit (14) according to any one of the preceding claims, **characterised in that** the housing (15) has a housing base body (22), wherein the first and the second guide section (3 1a,b) are formed in one piece by the housing base body (22) and/or that the brake body device (23) has a brake base body (25), wherein the first and the second axle section (30a, b) are formed in one piece by the brake base body (25).

6. The brake unit (14) according to any one of the preceding claims, **characterised in that** the brake body device (23) has a force distribution plate (24), wherein the force distribution plate (24) is operatively connected to the hydraulic device (16), and wherein the force distribution plate (24) is connected via the first, second and a third axle section (30a,b,c) in order to conduct the braking force from the hydraulic device (16) into the brake body device (23).

7. The brake unit (14) according to claim 6, **characterised by** a restoring device (33) for restoring the brake body device (23) in an axial opposite direction (GR), wherein the restoring device (33) has a first restoring spring, a second restoring spring and a third restoring spring (34a, b,c), wherein the first restoring spring (30a) is arranged coaxially with the master guide (28) and/or with the first axle section (30a), the second restoring spring (34b) is arranged coaxially with the auxiliary guide (29) and/or with the second axle section (30b) and the third restoring spring (34c) is arranged coaxially with the third axle section (30c).

8. A braking device (12) **characterised by** a brake unit (14) according to any one of the preceding claims, **characterised in that** the brake body device (23) has a brake disc (13), wherein the brake disc (13) is made of metal and/or wherein the braking device (12) has a brake lining, wherein the brake lining is and/or can be non-rotatably connected to a wheel (13) of the vehicle (1).

9. A vehicle (1) having the brake unit (14) according to any one of claims 1 to 7 and/or having the braking device (12) according to claim 8, **characterised in that** the vehicle is designed as an electric motorcycle or as an electric scooter.

## Revendications

1. Unité de freinage (14) pour véhicule (1), comportant
un boîtier (15),
un dispositif hydraulique (16),
un dispositif de corps de frein (23), le dispositif de corps de frein (23) formant ou portant un partenaire de freinage dans un dispositif de freinage (12) pour le véhicule (1), le boîtier (15), le dispositif hydraulique (16) et/ou le dispositif de corps de frein (23) définissant un axe principal (H),
le dispositif hydraulique (16) déplaçant le dispositif de corps de frein (23) par rapport au boîtier (15) dans une direction axiale (AR) afin de générer une force de freinage,
un dispositif de guidage, le dispositif de guidage guidant le dispositif de corps de frein (23) pendant le déplacement axial (AR) dans la direction radiale,
**caractérisée en ce que**
le dispositif de guidage comporte un guide maître (28) et un guide auxiliaire (29), le guide maître (28) et le guide auxiliaire (29) étant disposés de manière excentrée par rapport à l'axe principal, et **en ce que** le guide maître (28) comporte un premier un jeu radial et le guide auxiliaire (29) un second jeu radial, le premier jeu radial étant inférieur au second jeu radial.

2. Unité de freinage (14) selon la revendication 1, **caractérisée en ce que** le dispositif de corps de frein (23) comporte une surface de freinage, la surface de freinage étant formée circonférentiellement par rapport à l'axe principal (H) et/ou le dispositif hydraulique (16) comportant un espace annulaire (18) et un piston annulaire (19), l'espace annulaire (18) et le piston annulaire (19) étant formés circonférentiellement par rapport à l'axe principal (H).

3. Unité de freinage (14) selon l'une quelconque des revendications précédentes, **caractérisée en ce que** le guide maître (28) présente une première section d'axe (30a), la première section d'axe (30a) étant disposée contre le dispositif de corps de frein (23), et comportant une première section de guidage (31a), la première section de guidage (31a) étant disposée contre le boîtier (15), la première section d'axe (30a) étant disposée coaxialement dans la première section de guidage (31a) et/ou **en ce que** le guide auxiliaire (29) présente une deuxième section d'axe (30b), la deuxième section d'axe (30b) étant disposée contre le dispositif de corps de frein (23), et une seconde section de guidage (31b), la seconde section de guidage (31b) étant disposée contre le boîtier (15), la deuxième section d'axe (30b) étant coaxialement disposée dans la seconde section de guidage (31b).

4. Unité de freinage (14) selon l'une quelconque des revendications 1 à 3, **caractérisée en ce que** le guide maître (28) comporte une première douille de guidage (32a), la première douille de guidage (32a) étant placée sur la première section d'axe (30a), et/ou **en ce que** le guide auxiliaire (29) comporte une seconde douille de guidage (32b), la seconde douille de guidage (32b) étant placée sur la deuxième section d'axe (30b).

5. Unité de freinage (14) selon l'une quelconque des revendications précédentes, **caractérisée en ce que** le boîtier (15) comporte un corps de base de boîtier (22), la première et la seconde section de guidage (31a, b) étant formées d'une seule pièce par le corps de base de boîtier (22) et/ou **en ce que** le dispositif de corps de frein (23) comporte un corps de base de frein (25), la première et la deuxième section d'axe (30a, b) étant formées d'une seule pièce par le corps de base de frein (25).

6. Unité de freinage (14) selon l'une quelconque des revendications précédentes, **caractérisée en ce que** le dispositif de corps de frein (23) comporte une plaque de répartition de force (24), la plaque de répartition de force (24) étant fonctionnellement reliée au dispositif hydraulique (16), et la plaque de distribution de force (24) étant raccordée par l'intermédiaire de la première, de la deuxième et de la troisième section d'axe (30a, b, c) afin de conduire la force de freinage du dispositif hydraulique (16) dans le dispositif de corps de frein (23).

7. Unité de freinage (14) selon la revendication 6, **caractérisée par** un dispositif de rappel (33) pour rappeler le dispositif de corps de frein (23) dans une direction axiale opposée (GR), le dispositif de rappel (33) comportant un premier ressort de rappel, un deuxième ressort de rappel et un troisième ressort de rappel (34a, b, c), le premier ressort de rappel (30a) étant disposé coaxialement par rapport au guide maître (28) et/ou à la première section d'axe (30a), le deuxième ressort de rappel (34b) étant disposé coaxialement par rapport au guide auxiliaire (29) et/ou à la deuxième section d'axe (30b) et le troisième ressort de rappel (34c) étant disposé coaxialement par rapport à la troisième section d'axe (30c).

8. Dispositif de freinage (12) **caractérisé par** une unité de freinage (14) selon l'une quelconque des revendications précédentes, **caractérisé en ce que** le dispositif de corps de frein (23) comporte un disque de frein (13), le disque de frein (13) étant en métal et/ou le dispositif de freinage (12) comportant une garniture de frein, la garniture de frein étant solidaire en rotation et/ou pouvant être raccordée à une roue (13) du véhicule (1).

9. Véhicule (1) comportant l'unité de freinage (14) selon l'une quelconque des revendications 1 à 7 et/ou le dispositif de freinage (12) selon la revendication 8, **caractérisé en ce que** le véhicule est réalisé sous forme de trottinette électrique.
